(19) Europäisches Patentamt
European Patent Office
Office européen des brevets

(11) Veröffentlichungsnummer: **0 131 200 B1**

(12) **EUROPÄISCHE PATENTSCHRIFT**

(45) Veröffentlichungstag der Patentschrift: **24.04.91**

(51) Int. Cl.$^5$: **C08G 69/48**, C08G 59/10, C09J 163/00, D21H 17/52, D21H 17/55

(21) Anmeldenummer: **84107372.9**

(22) Anmeldetag: **27.06.84**

Die Akte enthält technische Angaben, die nach dem Eingang der Anmeldung eingereicht wurden und die nicht in dieser Patentschrift enthalten sind.

# (54) Wasserlösliche, von Esterbindungen weitgehend freie Reaktionsprodukte aus Epihalogenhydrin und wasserlöslichen basischen Polyamidoaminen, Verfahren zu ihrer Herstellung und ihre Verwendung.

(30) Priorität: **01.07.83 DE 3323732**

(43) Veröffentlichungstag der Anmeldung: **16.01.85 Patentblatt 85/03**

(45) Bekanntmachung des Hinweises auf die Patenterteilung: **24.04.91 Patentblatt 91/17**

(84) Benannte Vertragsstaaten: **AT BE CH DE FR GB LI NL SE**

(56) Entgegenhaltungen:
**US-A- 3 966 684**
**US-A- 4 075 177**
**US-A- 4 319 019**
**US-A- 4 336 835**

(73) Patentinhaber: **HOECHST AKTIENGESELLSCHAFT**
**Postfach 80 03 20**
**W-6230 Frankfurt am Main 80(DE)**

(72) Erfinder: **Marten, Manfred**
**Schneeheide 36**
**W-2104 Hamburg 92(DE)**
Erfinder: **Becker, Wilhelm, Dr.**
**Öjendorfer Höhe 37c**
**W-2000 Hamburg 74(DE)**
Erfinder: **Pommer, Winfried, Dr.**
**Waldenserstrasse 5f**
**W-6380 Bad Homburg(DE)**

**EP 0 131 200 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt (DE-AS 1 177 824), Polyamine mit mindestens drei Aminogruppen mit $C_{3-10}$-Dicarbonsäuren umzusetzen und die so erhaltenen Polyamide mit Epichlorhydrin in wasserlösliche Kondensationsprodukte zu überführen. Dabei kann das Epichlorhydrin in einem Molverhältnis zu den sekundären Aminogruppen des Polyamides von etwa (0,5 bis 1,8) : 1 verwendet werden. Die gewonnenen Produkte können zur Herstellung von naßfestem Papier dienen. Nach einer Ausführungsform dieses Verfahrens werden die Kondensationsprodukte zusätzlich noch einer Quaternisierung unterworfen, um die Lagerbeständigkeit zu verbessern, wobei nach einigen Beispielen das giftige Dimethylsulfat verwendet wird. Diese Arbeitsweise erfordert einen zusätzlichen Arbeitsgang, ganz abgesehen von der Umweltbelastung und den Vorsichtsmaßnahmen wegen der Verwendung toxischer Substanzen.

In einer anderen Druckschrift (DE-AS 1 546 369) ist die Herstellung von Papier, Pappe usw. mit verbesserter Naßfestigkeit beschrieben, wobei den wäßrigen Dispersionen von Cellulosefasern ein Polyamid-Epichlorhydrin-Kondensat zugesetzt und das Harz auf den Fasern ausgehärtet wird. Dieses Harz wird durch Polykondensation von $C_{3-10}$-Dicarbonsäuren mit Polyaminen im Molverhältnis Polyamine : Dicarbonsäure = (0,8 bis 1,4) : 1 in erster Stufe und durch weitere Umsetzung der erhaltenen Polyamide mit Epichlorhydrin in zweiter Stufe hergestellt. Die Stabilität und Naßfestigkeit dieser Produkte reicht jedoch für viele Verwendungszwecke nicht aus.

Nach einer weiteren Patentschrift (US-PS 4 075 177) werden kationische, wasserlösliche Harze hergestellt durch Umsetzung von Polyamid-Polyester-Copolymeren, die in wäßriger saurer Lösung aus 1) mindestens einer aliphatischen Dicarbonsäure, 2) mindestens einem Polyamin und 3) mindestens einem Dialkanolamin in einem Molverhältnis der Komponenten 1 : 2 : 3 von (0,8-1,1) : (0,3-0,9) : (0,1-0,7) erhalten werden, mit Epichlorhydrin in einem Verhältnis von 0,5 bis 1,8 Mol Epichlorhydrin pro aktivem H-Atom des Copolymeren. Diese Produkte können zur Verbesserung der Naßfestigkeit von Materialien aus Cellulosefasern wie Papier eingesetzt werden. Die Naßfestigkeit dieser Produkte war für viele Anwendungszwecke ebenfalls unzureichend.

Einschub für Seite 2

Gleiches gilt auch für die Produkte, die etwa nach Beispiel 11 der US-A 3.966.684 erhalten werden (vgl. Tabelle 3). Hiernach wird bei der Herstellung des Polyamidoamins ein Teil des Diethylentriamins (vgl. Beispiel 1 dieser US-A) durch Aminoethylethanol amin ersetzt, wodurch sogar eine Verschlechterung der Naßfestigkeit eintritt.

Die vorliegende Erfindung betrifft nunmehr wasserlösliche, von Esterbindungen weitgehend freie Reaktionsprodukte aus Epihalogenhydrin wie Epibromhydrin und vorzugsweise Epichlorhydrin und wasserlöslichen, basischen Polyamidoaminen, die dadurch gekennzeichnet sind, daß ihnen als Polyamidoamine Umsetzungsprodukte von

a) gesättigten oder olefinisch-ungesättigten aliphatischen $C_{4-10}$-Dicarbonsäuren oder deren funktionellen Derivaten bzw. mindestens 3 C-Atome enthaltenden $\omega$-Aminocarbonsäuren oder deren Lactamen mit

b1) aliphatischen Polyaminen, die mindestens zwei primäre und mindestens eine weitere, und zwar sekundäre und/oder tertiäre Aminogruppe enthalten, oder

b2) einem Gemisch der Polyamine b1) mit Polyaminen, die mindestens eine primäre und gegebenenfalls mindestens eine sekundäre Aminogruppe enthalten und nicht unter die Definition b1) fallen, wobei die zusätzlichen Polyamine in solchen Mengen verwendet werden können, daß deren Anteil an primären Aminogruppen, bezogen auf die Gesamtmenge der primären Aminogruppen, 70, vorzugsweise 50 und insbesondere 30 % nicht übersteigt, und

c) Monoalkanolaminen der Formel $H_2N\text{-}R^3\text{-}OH$, wobei $R^3$ einen n-, iso- oder Cycloalkylenrest mit 2 - 10, vorzugsweise 2 - 4, C-Atomen bedeutet

und wobei das Verhältnis der Summe der primären $NH_2$-Gruppen zu den Carboxylgruppen bzw. deren funktionellen Derivaten (0,8-1,4) : 1, vorzugsweise (0,95-1,1) : 1 und das der Molmengen von Polyaminen zu Alkanolamin (0,6:0,4) bis (0,99:0,01), vorzugsweise (0,8:0,2) bis (0,95:0,05) beträgt, zugrunde liegen. Der Begriff Polyamine umfaßt Amine mit mindestens zwei Aminogruppen.

Gegenstand der Erfindung ist auch ein Verfahren zur Herstellung der vorgenannten Reaktionsprodukte (Bindemittel) und deren Verwendung als Hilfsmittel in der Papierindustrie, insbesondere zur Erhöhung der Naßfestigkeit von Papier.

Es hat sich überraschenderweise gezeigt, daß die Kondensation von aliphatischen Dicarbonsäuren und Polyaminen unter Zusatz von Alkanolaminen zu niedrigmolekularen Polyamidoaminen führt, die nach der

Umsetzung mit Epihalogenhydrin lagerstabile Produkte ergeben und die Naßfestigkeit und andere Eigenschaften des damit ausgerüsteten Papiers hervorragend verbessern . Auch sollte der Anteil des eingesetzten Epihalogenhydrins möglichst niedrig sein, um das Auftreten von unerwünschten Hydrolyseprodukten zu vermeiden, die bei der Papierherstellung zu Störungen und Belästigungen führen können.Die erfindungsgemäßen Produkte sind im allgemeinen selbstvernetzend.
Während nach der US-PS 4 075 177 das Dialkanolamin mit dem Polyamin und der Dicarbonsäure zu einem Polyamid-Polyester kondensiert wird, werden erfindungsgemäß Produkte verwendet, in denen das Monoalkanolamin mit dem Polyamin und der Dicarbonsäure unerwartet monofunktionell über die primäre Aminogruppe umgesetzt ist. Durch die Menge des monofunktionellen Alkanolamins läßt sich so die Viskosität und Kettenlänge des Reaktionsproduktes steuern. In der anschließenden Umsetzung des Polyamidoamins mit Epihalogenhydrin kann man nun gezielt Naßfestmittel mit ausgezeichneten Eigenschaften herstellen.

Es ist ein Vorteil der erfindungsgemäßen Produkte, daß auch deren wäßrige Lösungen mit relativ hohen Feststoffgehalten, z. B. von 20 - 30 Gew.-%, hervorragend stabil sind, so daß auch nach längerer Zeit keine Gelbildung oder Ausfällung erfolgt. Die erfindungsgemdäßen Produkte bewirken darüberhinaus sehr hohe Naßfestigkeiten, und ihre Wirkung bleibt selbst nach monatelanger Lagerung konstant.

Als wasserlösliche, basische Polyamidoamine, die den erfindungsgemäßen wasserlöslichen Reaktionsprodukten zugrunde liegen, kommen insbesondere in Betracht:

1) Umsetzungsprodukte von a) gesättigten aliphatischen $C_4$-$C_{10}$-Dicarbonsäuren, wie Bernsteinsäure, Glutarsäure, Adipinsäure oder Sebazinsäure oder deren funktionellen Derivaten, wie Anhydriden und Estern, wobei die drei erstgenannten Säuren bevorzugt sind, mit den unter b) genannten Polyaminen und c) Alkanolaminen.

2) Umsetzungsprodukte von solchen gesättigten modifizierten Dicarbonsäuren bzw. deren Derivaten, die durch Anlagerung von aliphatischen, cycloaliphatischen, araliphatischen oder heterocyclischen Polyaminen, die mindestens zwei Aminogruppen, und zwar primäre und/oder sekundäre, enthalten, an $\alpha$,$\beta$-olefinisch-ungesättigte Carbonsäureester, deren Alkoholrest 1 bis 8, vorzugsweise 1 bis 3 C-Atome hat, wie Acrylsäureäthylester und Methacrylsäuremethylester, erhalten und dann mit den unter b) genannten Polyaminen und c) Alkanolaminen umgesetzt werden.

3) Umsetzungsprodukte von mindestens drei Kohlenstoffatome enthaltenden $\omega$-Aminocarbonsäuren oder deren Lactamen, z.B. 6-Aminocapronsäure und 8-Aminocaprylsäure bzw. 6-Caprolactam und 8-Capryllactam, mit den unter b) genannten Polyaminen und c) Alkanolaminen.

4) Umsetzungsprodukte von olefinisch ungesättigten Dicarbonsäuren, wie Maleinsäure oder Fumarsäure bzw. deren funktionellen Derivaten, wie Anhydriden oder Estern, mit den unter b) genannten Polyaminen und c) Alkanolaminen.

5) Solche Umsetzungsprodukte, denen außer den unter 1) genannten gesättigten, aliphatischen $C_4$-$C_{10}$-Dicarbonsäuren und den unter 4) genannten ungesättigten Dicarbonsäuren noch $\omega$-Aminocarbonsäuren oder deren Lactame des unter 3) angeführten Typs und außer den unter b1) angeführten Polyaminen noch mindestens eine primäre und gegebenenfalls eine sekundäre Aminogruppe, also z. B. eine primäre und eine sekundäre Aminogruppe, enthaltende aliphatische, cycloaliphatische, araliphatische oder heterocyclische Polyamine und c) Alkanolamine zugrunde liegen. Hierbei sind diejenigen Polyamidoamine zu bevorzugen, denen außer den Polyaminen b) und Alkanolaminen c) und außer den gesättigten $C_4$-$C_{10}$-Dicarbonsäuren noch $\omega$-Aminocarbonsäuren oder deren Lactame des unter 3) angeführten Typs zugrunde liegen.

Umsetzungsprodukte vom Typ 1) unter Verwendung von Diäthylentriamin, Triäthylentetramin und Tetraäthylenpentamin sind besonders bevorzugt.

Die zur Erzielung wasserlöslicher Polyamidoamine mit optimalen Eigenschaften einzuhaltenden Mengenverhältnisse der in Betracht kommenden Komponenten lassen sich durch Vorversuche leicht ermitteln.

Die Herstellung der Polyamidoamine kann in üblicher Weise erfolgt sein, z. B. durch mehrstündiges Erhitzen der entsprechenden Komponenten unter Ausschluß von Sauerstoff auf Temperaturen von 125 bis 250 °C zunächst unter gewöhnlichem Druck und dann unter vermindertem Druck, wobei zur Vermeidung der Dunkelfärbung der Polyamide geringe Mengen an Hydrazinhydrat oder Hydraziden zugesetzt werden können.

Als Polyamine b1) seien z. B. genannt Methyl-bis-(3-aminopropyl)-amin, Äthyl-bis-(3-aminopropyl)-amin, 2-Hydroxyäthyl-bis-(3-aminopropyl)-amin, N-(3-Aminopropyl)-tetramethylendiamin, N,N'-Bis-(3-aminopropyl)-tetramethylendiamin, Polyalkylen-polyamine der Formel I (siehe Ansprüche), die mindestens zwei primäre und mindestens eine sekundäre und/oder tertiäre Aminogruppe enthalten, in der
$R^1$ und $R^2$ unabhängig voneinander Wasserstoff oder ein gegebenenfalls durch eine primäre Amino- oder Hydroxygruppe substituierter $C_1$-$C_{10}$-, vorzugsweise $C_{1-4}$-Alkylrest,
m eine ganze Zahl von 1 bis 8, vorzugsweise 2 bis 4, und

n eine ganze Zahl von 2 bis 10, vorzugsweise 3 bis 6, bedeuten, wie Di-propylen-(1,2)-triamin, Bis-(3-aminopropyl)-amin, Tripropylen-(1,2)-tetramin und vor allem Diäthylentriamin, Triäthylentetramin und Tetraäthylenpentamin. Als Polyamine b2), die im Gemisch mit den Polyaminen b1)eingesetzt werden kommen z. B. in Frage: Äthylendiamin, N-(2-Hydroxyäthyl)-äthylendiamin, N,N'-Dimethyl-äthylendiamin, 1,2-Diaminopropan, 1-Amino-3-methyl-amino-propan, 1,6-Diaminohexan, 1,4-Diaminocyclohexan, 1,3-Bis-aminomethylbenzol, Piperazin sowie solche Verbindungen der Formel (I), die nicht unter die Definition b1) fallen. Diese Amine können für die Umsetzungsprodukte vom Typ 1) bis 5) verwendet werden, soweit sie unter die dort genannten Definitionen fallen. Dabei sind vor allem die Polyalkylenpolyamine der Formel (I) für den Typ a) von Interesse.

Als Alyanolamine der Formel $H_2N\text{-}R^3\text{-}OH$ kommen z. B. in Frage 1-Amino-2-propanol, 3-Amino-1-propanol, 2-Amino-1-butanol, 4-Amino-1-butanol, 5-Amino-1-pentanol, 6-Amino-1-hexanol und deren Isomere, deren Kohlenwasserstoffrest verzweigt ist oder die die Aminogruppe und/oder die Hydroxylgruppe an einem primären oder sekundären C-Atom tragen, ferner solche, die sich von cyclischen Kohlenwasserstoffresten, vorzugsweise mit 5 - 7 C-Atomen, ableiten, insbesonders aber 2-Aminoäthanol.

Die Herstellung der erfindungsgemäßen Reaktionsprodukte aus dem Epihalogenhydrin und Polyamidoamin kann in der Weise erfolgen, daß man wäßrige,etwa 25 bis 50 %ige Lösungen der beiden Komponenten bei einer Temperatur zwischen 25 und 95 °C, vorzugsweise 40 und 70 °C, so lange rührt, bis eine Probe der Reaktionsmischung in Form einer 20 %igen wäßrigen Lösung bei 25 °C eine Viskosität von 20 - 80, vorzugsweise 40 bis 60 mPa.s, aufweist. Danach setzt man der Mischung zur Beendigung der Einwirkung und zur Stabilisierung der an sich selbstvernetzenden Reaktionsprodukte zweckmäßig so viel Säure, z. B. Salzsäure, Schwefelsäure oder Essigsäure zu, daß der pH-Wert der wäßrigen Lösung zwischen 3 und 6, vorzugsweise zwischen 4 und 5, liegt, und stellt, den, Feststoffgehalt der Reaktionslösung durch Verdünnen mit Wasser auf 10 bis 20 Gew.-% ein. Hierbei kann es für die Lagerung von Vorteil sein, zusätzlich Konservierungsmittel z.B. Kaliumsorbat zuzufügen.

Im allgemeinen leiten sich die Umsetzungsprodukte von 0,8 bis 2, vorzugsweise 0,9 bis 1,55 Mol Epihalogenhydrin, vorzugsweise Epichlorhydrin, je verbliebener freier basischer Aminogruppe im Polyamidoamin ab. Um die Naßfestigkeit von Papier gemäß der vorliegenden Erfindung zu erhöhen, kann man in üblicher Weise bevorzugt so vorgehen, daß man, die in Betracht kommenden Reaktionsprodukte in Form wäßriger Lösungen bereits der wäßrigen Suspension des Papierrohstoffes vor der Verarbeitung zu Papier zusetzt. Die Mengen an Reaktionsprodukt, die zur Erzielung der gewünschten Naßfestigkeit erforderlich sind, lassen sich durch Vorversuche ohne Schwierigkeiten ermitteln. Im allgemeinen empfiehlt es sich, 0,05 bis 2, vorzugsweise 0,1 bis 1,6 Gewichtsteile Festharz auf 100 Gewichtsteile Papierrohstoff einzusetzen, zweckmäßig in Form einer wäßrigen Lösung, deren Gehalt an Reaktionsprodukten 10 - 20 Gew.-% beträgt.

Mit Hilfe der erfindungsgemäßen Reaktionsprodukte gelingt es, die Naßfestigkeit von Papier - auch von Papier aus ungebleichtem Zellstoff - hervorragend zu verbessern. In manchen Fällen ist es - je nach Art des Papiers bzw. nach Wunsch - auch möglich, die Saugfähigkeit zu erhöhen. Bemerkenswert ist, daß die Reaktionsprodukte den Weißgrad von Papier, das aus gebleichtem Zellstoff hergestellt ist, praktisch nicht beeinträchtigen. Erwähnt sei ferner, daß die Geschwindigkeit, mit der die erfindungsgemäß zu verwendenden Reaktionsprodukte auf dem Papier bzw. im Zellstoff vernetzen, hoch ist und daß die Reaktionsprodukte auch als Retentionshilfsmittel für bei der Papierherstellung verwendete Füllstoffe, Drainagehilfsstoffe zur Verbesserung der Papierherstellungsgeschwindigkeit und Flockungsmittel zur Entfernung feiner Teilchen aus Schmutzwasser, z. B. industriellem Abwasser, verwendet werden können. Diese wertvollen Wirkungen und Eigenschaften besitzen die Reaktionsprodukte von Epichlorhydrin mit Polyamidoaminen, die bislang zur Verbesserung der Naßfestigkeit von Papier verwendet worden sind, nicht in gleichem Umfang.

Die folgenden Beispiele sollen die Erfindung näher veranschaulichen. Sofern nicht anders angegeben bedeutet Prozent Gewichtsprozente.

## Beispiele

### 1 a) Herstellung des Polyamidoamins

392 g Diäthylentriamin (3,8 Mol) und 24,4 g (0,4 Mol) 2-Amino-äthanol wurden in einen Dreihalskolben mit Rührer, Thermometer und Wasserabscheider gefüllt und innerhalb von 30 Minuten 584 g Adipinsäure (4 Mol) portionsweise zugegeben, so daß die Temperatur nicht über 100 °C stieg. Dann wurde in 3 Stunden auf 150 °C geheizt, eine Stunde bei dieser Temperatur gehalten und weiter auf 170 °C erwärmt, wobei das gebildete Wasser gleichmäßig herausdestillierte. Nach einer Haltezeit von etwa 2 Stunden hatte das

Kondensat eine Säurezahl von 19 und eine Aminzahl von 251. Nach Entfernen der Heizung wurde das Polyamidoamin mit 570 g Wasser verdünnt. Die Lösung hatte einen Festkörpergehalt von 59,8 % (1 g, 1 Stunde 125 °C) und eine Viskosität von 850 mPa.s (25 °C, Höppler).

1 b) Herstellung eines Reaktionsproduktes

357 g des Polyamidoamin-Vorproduktes aus Beispiel 1a) (entsprechend 0,95 Val Amin-NH) und 357 g Wasser wurden in einen Dreihalskolben mit Rührer, Thermometer und Kühler gegeben und unter Rühren 123 g Epichlorhydrin (1,33 Mol) zugesetzt. In 30 Minuten wurde auf 55 - 60 °C erwärmt und bei dieser Temperatur gehalten. Nach 4 Stunden betrug die Viskosität nach Gardner I-J. Es wurden 389 g Wasser zugegeben, auf 60 - 65 °C erwärmt und bei dieser Temperatur gehalten. Nach 2 1/2 Stunden betrug die Viskosität nach Gardner G. Dann wurden 440 g Wasser, in denen 1,7 g Kaliumsorbat gelöst waren, zugegeben und gekühlt. Danach wurde mit 7,5 ml 48 %iger Schwefelsäure auf pH 4 eingestellt. Die Harzlösung hatte einen Festkörpergehalt von 20 % (1 g, 1 Stunde 100 °C) und eine Viskosität von 57 mPa.s (25 °C, Höppler).

1 c) Herstellung eines Reaktionsproduktes

Beispiel 1 b wurde mit der Abweichung wiederholt, daß 105 g Epichlorhydrin (1,14 Mol) verwendet wurden. In 30 Minuten wurde auf 60 °C erwärmt und bei dieser Temperatur gehalten. Nach 2 1/2 Stunden betrug die Viskosität nach Gardner R. Es wurden 954 g Wasser zugegeben, wieder auf 60 °C erwärmt und bei dieser Temperatur gehalten. Nach 2 Sunden betrug die Viskosität nach Gardner F. Dann wurden 754 g Wasser, in denen 2,8 g Kaliumsorbat gelöst waren, zugegeben und gekühlt. Danach wurde mit 12 ml 48 %iger Schwefelsäure auf pH 4 eingestellt. Die Harzlösung hatte einen Festkörpergehalt von 12,4 % (1 g, 1 Stunde 100 °C) und eine Viskosität von 36 mPa.s (25 °C, Höppler).

2 a) Herstellung des Polyamidoamins

743 g Diäthylentriamin (7,2 Mol), 97,6 g 2-Aminoäthanol (1,6 Mol) und 1169 g Adipinsäure (8 Mol) wurden wie im Beispiel 1a) umgesetzt. Nach einer Haltezeit von etwa 2 Stunden hatte das Kondensat eine Säurezahl von 21 und eine Aminzahl von 261. Nach Entfernen der Heizung wurde das Polyamidoamin mit 1165 g Wasser verdünnt. Die Lösung hatte einen Festkörpergehalt von 60,2 % (1 g, 1 Stunde 125 °C) und eine Viskosität von 600 mPa.s (25 °C, Höppler).

2 b) Herstellung des Reaktionsproduktes

358 g Polyamidoamin-Vorprodukt aus Beispiel 2a) (entsprechend 0,9 Val Amin-NH) und 358 g Wasser wurden in einen Dreihalskolben mit Rührer, Thermometer und Kühler gegeben und unter Rühren 100 g Epichlorhydrin (1,08 Mol) zugesetzt. In 30 min wurde auf 60 °C erwärmt. Nach einer Haltezeit von 3 Stunden bei dieser Temperatur betrug die Viskosität nach Gardner I. Es wurden 329 g Wasser zugegeben auf 65 °C erwärmt und bei dieser Temperatur gehalten. Nach 2 Stunden betrug die Viskosität nach Gardner F-G. Dann wurden 430 g Wasser, in denen 1,6 g Kaliumsorbat gelöst waren, zugegeben und gekühlt. Danach wurde mit 10 ml 48 %iger Schwefelsäure auf pH 4 eingestellt.

Die Harzlösung hatte einen Festkörpergehalt von 20,4 % (1 g, 1 Stunde 100 °C) und eine Viskosität von 48 mPa.s (25 °C, Höppler).

3 a) Herstellung des Polyamidoamins

Zu 660 g Diäthylentriamin (6,4 Mol), 72 g Äthylendiamin (1,2 Mol) und 48,9 g 2-Aminoäthanol (0,8 Mol) wurden in der im Beispiel 1a) genannten Vorrichtung innerhalb von 30 Min. 1169 g Adipinsäure (8 Mol) portionsweise So zugegeben, daß die Temperatur nicht über 100 °C stieg. Dann wurde in 3 Stunden auf 150 °C geheizt , eine Stunde bei dieser Temperatur gehalten und weiter auf 170 °C erwärmt, wobei das gebildete Wasser gleichmäßig herausdestillierte. Nach einer Haltezeit von ca. 2 Stunden hatte das

Kondensat eine Säurezahl von 18 und eine Aminzahl von 232. Nach Entfernen der Heizung wurde das Polyamidoamin mit 1123 g Wasser verdünnt. Die Lösung hatte einen Festkörpergehalt von 59,8 % (1 g, 1 Stunde 125 °C) und eine Viskosität von 740 mPa.s (25 °C, Höppler).

3 b) Herstellung des Reaktionsproduktes

346 g des Polyamidoamin-Vorproduktes aus Beispiel 3a) (entsprechend 0,8 Val Amin-NH) und 346 g Wasser wurden in der in Beispiel 1b) genannten Weise mit 104 g Epichlorhydrin (1,12 Mol) umgesetzt. Nach 3 1/2 Stunden bei 55 - 60 °C betrug die Viskosität nach Gardner I-J. Es wurden 338 g Wasser zugegeben, auf 60 - 65 °C erwärmt und bei dieser Temperatur gehalten. Nach 2 1/2 Stunden betrug die Viskosität nach Gardner F-G. Dann wurden 420 g Wasser, in denen 1,6 g Kaliumsorbat gelöst waren, zugegeben und gekühlt. Danach wurde mit 7 ml 48 %iger Schwefelsäure auf pH 4 eingestellt. Die Harzlösung hatte einen Festkörpergehalt von 19,8 % (1 g, 1 Stunde 100 °C) und eine Viskosität von 52 mPa.s (25 °C, Höppler).

4 a)Herstellung des Polyamidoamins

Zu 784 g Diäthylentriamin (7,6 Mol) und 60,1 g 2-Amino-1-propanol (0,8 Mol) wurden in der im Beispiel 1a) genannten Vorrichtung innerhalb von 20 Minuten 1169 g Adipinsäure (8 Mol) portionsweise so zugegeben, daß die Temperatur nicht über 100 °C stieg. Dann wurde in 3 Stunden auf 145 °C geheizt, eine Stunde bei dieser Temperatur gehalten und weiter auf 170 °C erwärmt, wobei das gebildete Wasser gleichmäßig herausdestillierte. Nach einer Haltezeit von ca. 2 1/2 Stunden hatte das Kondensat eine Säurezahl von 18 und eine Aminzahl von 270. Nach Entfernen der Heizung wurde das Polyamidoamin mit 1100 g Wasser verdünnt. Die Lösung hatte einen Festkörpergehalt von 60,2 % (1 g, 1 Stunde 125 °C ) und eine Viskosität von 1100 mPa.s (25 °C, Höppler).

4 b) Herstellung des Reaktionsproduktes

359 g des Polyamidoamin-Vorproduktes aus Beispiel 4a) (entsprechend 0,95 Val Amin NH) und 359 g Wasser wurden in der im Beispiel 2b) genannten Weise mit 123 g Epichlorhydrin (1,33 Mol) umgesetzt. Nach 2 1/2 Stunden bei 60 °C betrug die Viskosität nach Gardner I-J. Es wurden 392 g Wasser zugegeben, auf 60 - 65 °C erwärmt und bei dieser Temperatur gehalten. Nach 2 Stunden betrug die Viskosität nach Gardner F-G. Dann wurden 432 g Wasser, in denen 1,85 g Kaliumsorbat gelöst waren, zugegeben und gekühlt. Danach wurde mit 11,3 ml 48 %iger Schwefelsäure auf pH 4 eingestellt. Die Harzlösung hatte einen Festkörpergehalt von 19,8 % (1 g, 1 Stunde 100 °C) und eine Viskosität von 53 mPa.s (25 °C, Höppler).

5 a) Herstellung des Polyamidoamins (Vergleich)

413 g Diäthylentriamin (4 Mol) und 584 g Adipinsäure (4 Mol) wurden wie in Beispiel 1a) umgesetzt. Nach einer Haltezeit von etwa 2 Stunden hatte das Kondensat eine Säurezahl von 20 und eine Aminzahl von 303. Nach Entfernen der Heizung wurde das Polyamidoamin mit 564 g Wasser verdünnt. Die Lösung hatte einen Festkörpergehalt von 60,0 % (1 g, 1 Stunde 125 °C) und eine Viskosität von 5100 mPa.s (25 °C, Höppler).

5 b) Herstellung eines Reaktionsproduktes (Vergleich)

355 g des Polyamidoamin-Vorproduktes aus Beispiel 5a) (entsprechend 1,0 Val Amin-NH) und 355 g Wasser wurden wie im Beispiel 2b) mit 129,5 g Epichlorhydrin (1,4 Mol) umgesetzt. Nach 2 Stunden bei 60 °C betrug die Viskosität nach Gardner I-J. Es wurden 406 g Wasser Zugegeben wieder auf 60 °C erwärmt und bei dieser Temperatur gehalten. Nach 2 1/2 Stunden betrug die Viskosität nach Gardner F-G.Dann wurden 450 g Wasser, in denen 1,7 g Kaliumsorbat gelöst waren, zugegeben und gekühlt. Danach wurde mit 11 ml 48 %iger Schwefelsäure auf pH 4 eingestellt. Die Harz-Lösung hatte einen Festkörpergehalt von 19,9 % (1 g, 1 Stunde 100 °C) und eine Viskosität von 60 mPa.s (25 °C, Höppler).

5 c)Herstellung eines Reaktionsproduktes (Vergleich)

355 g des Polyamidoamin-Vorproduktes aus Beispiel 5a) (entsprechend 1,0 Val Amin-NH) und 355 g Wasser wurden wie im Beispiel 2b) mit 111 g Epichlorhydrin (1,2 Mol) umgesetzt. Nach einer Haltezeit von 2 Stunden betrug die Viskosität nach Gardner N. Es wurden 1031 g Wasser zugegeben, auf 60 - 65 °C erwärmt und bei dieser Temperatur gehalten. Nach 2 Stunden betrug die Viskosität nach Gardner E-F. Dann wurden 730 g Wasser, in denen 2,6 g Kaliumsorbat gelöst waren, zugegeben und gekühlt. Danach wurde mit 10 ml 48 %iger Schwefelsäure auf pH 4 eingestellt. Die Harz-Lösung hatte einen Festkörpergehalt von 12,3 % (1 g, 1 Stunde 100 °C) und eine Viskosität von 38 mPa.s (25 °C, Höppler).

Papierbehandlung

Zu 2 kg einer Suspension von 10 g gebleichtem Sulfitzellstoff mit einem Mahlgrad von 42 bis 43 ° Schopper-Riegler wurde unter starkem Rühren die 20 %ige wäßrige Lösung von Beispiel 1b) in einer Menge von 1 % Festharz auf Zellstoff gegeben. Nach einer Aufziehzeit von mindestens 2 Minuten wurden in einem Blattbildner nach Schopper zwei Papierblätter von ca. 320 $cm^2$ Fläche mit einem Flächengewicht von 100 $g/m^2$ gebildet, auf dem Trockenzylinder 5 Minuten bei 100 °C erwärmt und 10 Minuten bei 120 °C im Trockenschrank nachgehärtet. Nach einer Klimatisierungszeit von 24 Stunden bei 20 °C und 65 % relativer Luftfeuchtigkeit wurden von Probestreifen des Papiers die Naßfestigkeiten in Newton (N) nach der Prüfvorschriftdes Zelluloseinstituts der Technischen, Hochschule Darmstadt gemessen. Das auf diese Weise erhaltene Papier weist eine Naßfestigkeit auf, die erheblich höher liegt als die eines Papiers, das aus dem gleichen gebleichten Sulfitzellstoff ohne Zusatz der wäßrigen Lösungen der erfindungsgemäß verwendeten Produkte unter gleichen Versuchsbedingungen hergestellt wurde.

Tauscht man nun die wäßrige Lösung des Produktes nach Beispiel 1b) gegen die 20 %ige Lösung des Produktes 2b) bzw. gegen die 12,5 %ige Lösung des Produktes 1c) aus, so weist das erhaltene Papier ebenfalls eine erheblich höhere Naßfestigkeit auf als ein Papier, das aus dem gleichen Sulfitzellstoff ohne Zusatz der Wäßrigen Lösungen dieser Produkte unter sonst gleichen Versuchsbedingungen hergestellt wurde. Die Erhöhungen, die durch die Produkte nach den vorstehenden Beispielen gegenüber den Vergleichsversuchen hinsichtlich der Naßfestigkeit erzielt wurden, sind aus Tabelle 1 zu ersehen. Die Naßfestigkeiten in N wurden in Relativ-%, bezogen auf das Vergleichsprodukt 5c) = 100 %, angegeben.

Prüfung der Lagerstabilität

Die erhaltenen Produkte von Beispiel 1b), 1c), 2b), 3b), 4b), 5b) und 5c) wurden bei 50 °C gelagert und auf eine möglicherweise auftretende Gelbildung beobachtet. Die Lagerstabilität in Tagen ist ebenfalls aus Tabelle 1 zu entnehmen.

Tabelle 1

| Produkt nach Beispiel | Lagerstabilität in Tagen bei 50°C | Naßfestigkeit in Relativ-% |
|---|---|---|
| 1b | >60 | 115 |
| 1c | >60 | 117 |
| 2b | >60 | 108 |
| 3b | >60 | 114 |
| 4b | >60 | 115 |
| 5b (Vergleich) | 1 | 97 |
| 5c (Vergleich) | 5 | 100 |
| ohne | | 17 |

Aus Tabelle 1 ist der technische Fortschritt der Werte mit den erfindungsgemäß vorgeschlagenen Produkten gegenüber denen der Vergleichsproben zu ersehen. Die nach den erfindungsgemäßen Beispielen 1b), 1c), 2b), 3b) und 4b) gefundenen Naßfestigkeitswerte liegen beträchtlich Über denen der Vergleichsbeispiele 5b) und 5c). Wie aus Tabelle 1 ebenfalls ersichtlich ist, sind die erfindungsgemäßen Harze lagerstabil, während die Produkte der Vergleichsbeispiele nach wenigen Tagen gelieren.

## Ansprüche

1. Wasserlösliche, von Esterbindungen weitgehend freie Reaktionsprodukte aus Epihalogenhydrin und wasserlöslichen, basischen Polyamidoaminen, dadurch gekennzeichnet daß ihnen als Polyamidoamine Umsetzungsprodukte von
   a) gesättigten oder olefinisch-ungesättigten aliphatischen $C_{4-10}$-Dicarbonsäuren oder deren funktionellen Derivaten und/oder mindestens 3 C-Atome enthaltenden $\omega$-Aminocarbonsäuren oder deren Lactamen mit
   b1) aliphatischen Polyaminen, die mindestens zwei primäre und mindestens eine weitere, und zwar sekundäre und/oder tertiäre Aminogruppe enthalten oder
   b2) einem Gemisch der Polyamine b1) mit Polyaminen, die mindestens eine primäre und gegebenenfalls mindestens eine sekundäre Aminogruppe enthalten und nicht unter die Definition b1) fallen, wobei die zusätzlichen Polyamine in solchen Mengen verwendet werden können, daß deren Anteil an primären Aminogruppen, bezogen auf die Gesamtmenge der primären Aminogruppen 70% nicht übersteigt, und
   c) Monoalkanolaminen der Formel $H_2N\text{-}R^3\text{-}OH$, wobei $R^3$ einen n-, iso- oder Cycloalkylenrest mit 2 - 10, vorzugsweise 2 - 4, C-Atomen bedeutet
   und wobei das Verhältnis der Summe der primären $NH_2$-Gruppen zu den Carboxylgruppen bzw. deren funktionellen Derivaten (0,8-1,4) : 1, und das der Molmengen von Polyaminen zu Alkanolamin (0,6:0,4) bis (0,99:0,01) beträgt, zugrunde liegen.

2. Reaktionsprodukte nach Anspruch 1, dadurch gekennzeichnet, daß ihnen Polyamidoamine zugrunde liegen, die aus mindestens einer der Säuren Bernsteinsäure, Glutarsäure und Adipinsäure als Säurekomponente aufgebaut sind.

3. Reaktionsprodukte nach Anspruch 1 oder 2, dadurch gekennzeichnet, daß ihnen Polyamidoamine zugrunde liegen, deren Komponenten b1) bzw: b2) Polyalkylenpolyamine der Formel (I)

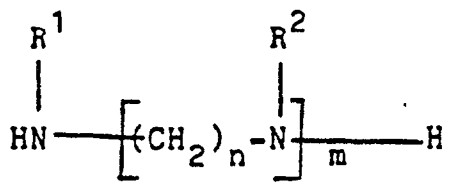

(I)

sind, worin
$R^1$ und $R^2$ unabhängig voneinander Wasserstoff oder ein gegebenenfalls durch eine primäre Amino- oder Hydroxygruppe substituierter $C_1$-$C_{10}$-, vorzugsweise $C_{1-4}$-Alkylrest,
m eine ganze Zahl von 1 bis 8, vorzugsweise 2 bis 4, und
n eine ganze Zahl von 2 bis 10, vorzugsweise 3 bis 6 ist.

**4.** Reaktionsprodukte nach einem oder mehreren der Ansprüche 1 bis 3, dadurch gekennzeichnet, daß ihnen Polyamidoamine zugrunde liegen die aus Diäthylentriamin, Triäthylentetramin oder Tetraäthylenpentamin als Komponente b) und Monoalkanolaminen, in denen $R^3$ vorzugsweise einen Alkylenrest mit 2 - 4 C-Atomen bedeutet, insbesonders aber 2-Aminoäthanol darstellt, als Komponente c) hergestellt worden sind.

**5.** Reaktionsprodukte nach einem oder mehreren der Ansprüche 1 bis 4, dadurch gekennzeichnet daß ihnen Polyamidoamine zugrunde liegen, die aus Polyaminen, Alkanolaminen und Dicarbonsäuren im Verhältnis der Summe der primären $NH_2$-Gruppen zu den Carboxylgruppen von (0,95-1,1) : 1 hergestellt worden sind und in denen das Verhältnis der Molmengen von Polyaminen b) zu Alkanolaminen c)0,8 : 0,2 bis 0,95 : 0,05 beträgt.

**6.** Reaktionsprodukte nach einem oder mehreren der Ansprüche 1 bis 5 dadurch gekennzeichnet, daß die Umsetzungsprodukte sich von 0,8 bis 2 Mol Epihalogenhydrin je verbliebener freier basischer Aminogruppe im Polyamidoamin ableiten.

**7.** Reationsprodukte nach Anspruch 6, dadurch gekennzeichnet, daß 0,9 bis 1,55 Mol Epihalogenhydrin je Aminogruppe umgesetzt werden.

**8.** Reaktionsprodukte nach einem oder mehreren der Ansprüche 1 bis 7, dadurch gekennzeichnet, daß die Komponente b2) die zusätzlichen Polyamine in einer solchen Menge enthält, daß deren Anteil an primären Aminogruppen, bezogen auf die Gesamtmenge der primären Aminogruppen, 50 und insbesondere 30 % nicht übersteigt.

**9.** Verfahren zur Herstellung von Bindemitteln auf der Basis von Epihalogenhydrin und wasserlöslichen basischen Polyamidoaminen gemäß einem oder mehreren der Ansprüche 1 bis 8, dadurch gekennzeichnet, daß man das Epihalogenhydrin und das Polyamidoamin in wäßriger Lösung miteinander, vorzugsweise bei 40 bis 70 °C, umsetzt, bis eine Probe der Reaktionsmischung in Form einer 20 %igen wäßrigen Lösung bei 25 °C eine Viskosität von 20 - 80 mPa.s aufweist.

**10.** Verwendung der Reaktionsprodukte nach einem oder mehreren der Ansprüche 1 - 8, bzw. der nach dem Verfahren gemäß Anspruch 9, hergestellten Produkte als Hilfsmittel in der Papierindustrie, insbesondere zur Erhöhung der Naßfestigkeit von Papier.

Patentansprüche für folgenden Vertragsstaat: AT

**1.** Verfahren zur Herstellung von wasserlöslichen, von Esterbindungen weitgehend freien Reaktionsprodukten als Bindemittel aus Epihalogenhydrin und wasserlöslichen, basischen Polyamidoaminen, dadurch gekennzeichnet, daß man Polyamidoamine, die Umsetzungsprodukte von

a) gesättigten oder olefinisch-ungesättigten aliphatischen $C_{4-10}$-Dicarbonsäuren oder deren funktionellen Derivaten und/oder mindestens 3 C-Atome enthaltenden ω-Aminocarbonsäuren oder deren Lactamen mit

b1) aliphatischen Polyaminen, die mindestens zwei primäre und mindestens eine weitere, und zwar sekundäre und/oder tertiäre Aminogruppe enthalten oder

b2) einem Gemisch der Polyamine b1) mit Polyaminen die mindestens eine primäre und gegebenenfalls mindestens eine sekundäre Aminogruppe enthalten und nicht unter die Definition b1) fallen, wobei die zusätzlichen Polyamine in solchen Mengen verwendet werden können, daß deren Anteil an primären Aminogruppen, bezogen auf die Gesamtmenge der primären Aminogruppen, 70, vorzugsweise 50 und insbesondere 30 % nicht übersteigt, und
c) Monoalkanolaminen der Formel $H_2N$-$R^3$-OH, wobei $R^3$ einen n-, iso- oder Cycloalkylenrest mit 2 - 10, vorzugsweise 2 - 4, C-Atomen bedeutet
und wobei das Verhältnis der Summe der primären $NH_2$-Gruppen zu den Carboxylgruppen bzw. deren funktionellen Derivaten (0,8-1,4) : 1, und das der Molmengen von Polyaminen zu Alkanolamin (0,6:0,4) bis (0,99:0,01) beträgt, sind und das Epihalogenhydrin in wäßriger Lösung miteinander, bei 25 bis 95, vorzugsweise 40 bis 70° C, umsetzt, bis eine Probe der Reaktionsmischung in Form einer 20 %igen wäßrigen Lösung bei 25° C eine Viskosität von 20 - 80 mPa.s aufweist.

2. Verfahren nach Anspruch 1, dadurch gekennzeichnet, daß man Polyamidoamine einsetzt, die aus mindestens einer der Säuren Bernsteinsäure Glutarsäure und Adipinsäure als Säurekomponente aufgebaut sind.

3. Verfahren nach Anspruch 1 oder 2, dadurch gekennzeichnet, daß man Polyamidoamine einsetzt, deren Komponenten b1) bzw. b2) Polyalkylenpolyamine der Formel (I)

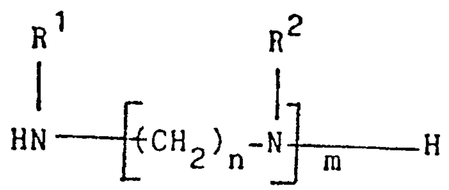
(I)

sind, worin
$R^1$ und $R^2$ unabhängig voneinander Wasserstoff oder ein gegebenenfalls durch eine primäre Amino- oder Hydroxygruppe substituierter $C_1$-$C_{10}$-, vorzugsweise $C_{1-4}$-Alkylrest,
m eine ganze Zahl von 1 bis 8, vorzugsweise 2 bis 4, und
n eine ganze Zahl von 2 bis 10, vorzugsweise 3 bis 6 ist.

4. Verfahren nach einem oder mehreren der Ansprüche 1 bis 3, dadurch gekennzeichnet ,daß man Polyamidoamine einsetzt,die aus Diäthylentriamin, Triäthylentetramin oder Tetraäthylenpentamin als Komponente b) und Monoalkanolaminen, in denen $R^3$ vorzugsweise einen Alkylenrest mit 2-4 C-Atomen bedeutet, insbesonders aber 2-Aminoäthanol darstellt, als Komponente c) hergestellt worden sind.

5. Verfahren nach einen oder mehreren der Ansprüche 1 bis 4, dadurch gekennzeichnet, daß man Polyamidoamine einsetzt, die aus Polyaminen, Alkanolaminen und Dicarbonsäuren im Verhältnis der Summe der primären $NH_2$-Gruppen zu den Carboxylgruppen von (0,95-1,1) : 1 hergestellt worden sind.

6. Verfahren nach einem oder mehreren der Ansprüche 1 bis 5, dadurch gekennzeichnet, daß das Verhältnis der Molmengen von Polyaminen b) zu Alkanolaminen c) 0,8 : 0,2 bis 0,95 : 0,05 beträgt.

7. Verfahren nach einem oder mehreren der Ansprüche 1 bis 6, dadurch gekennzeichnet, daß 0,8 bis 2 Mol Epihalogenhydrin je verbliebener freier basischer Aminogruppe im Polyamidoamin umgesetzt werden.

8. Verfahren nach Anspruch 7, dadurch gekennzeichnet, daß 0,9 bis 1,55 Mol Epihalogenhydrin je Aminogruppe umgesetzt werden.

9. Verfahren nach einem oder mehreren der Ansprüche 1 bis 8, dadurch gekennzeichnet, daß eine Komponente b2) eingesetzt wird, die zusätzliche Polyamine in einer solchen Menge enthält, daß deren Anteil an primären Aminogruppen, bezogen auf die Gesamtmenge der primären Aminogruppen, 50 und insbesondere 30 % nicht übersteigt.

**10.** Verwendung der Reaktionsprodukte nach einem oder mehreren der Ansprüche 1 - 8, bzw. der nach dem Verfahren gemäß Anspruch 9, hergestellten Produkte als Hilfsmittel in der Papierindustrie, insbesondere zur Erhöhung der Naßfestigkeit von Papier.

## Claims

**1.** A water-soluble reaction product which is largely free of ester bonds, formed from epihalohydrin and water-soluble, basic polyamidoamines, characterised in that, as polyamidoamines, it is based on reaction products of

a) saturated or olefinically unsaturated aliphatic $C_{4-10}$-dicarboxylic acids or their functional derivatives and/or $\omega$-aminocarboxylic acids containing at least three carbon atoms or their lactams with

b1) aliphatic polyamines which contain at least two primary and at least one other, in particular secondary and/or tertiary, amino group, or

b2) a mixture of the polyamines b1) with polyamines which contain at least one primary and, if desired, at least one secondary amino group and do not come under the definition b1), where the additional polyamines can be added in amounts such that their content of primary amino groups, relative to the total amount of primary amino groups, does not exceed 70%, and

c) monoalkanolamines of the formula $H_2N\text{-}R^3\text{-}OH$, where $R^3$ is an n-, iso- or cycloalkylene radical having 2 - 10, preferably 2 - 4, carbon atoms

and where the ratio of the sum of the primary $NH_2$ groups to the carboxyl groups or their functional derivatives is (0.8-1.4) : 1, and that of the molar amounts of polyamines to alkanolamine is (0.6:0.4) to (0.99:0.01).

**2.** A reaction product according to Claim 1, characterised in that it is based on a polyamidoamine which is synthesised from at least one of the acids succinic acid, glutaric acid and adipic acid as the acid component.

**3.** A reaction product according to Claim 1 or 2, characterised in that it is based on a polyamidoamine whose components b1) and b2) are polyalkylenepolyamines of the formula (I)

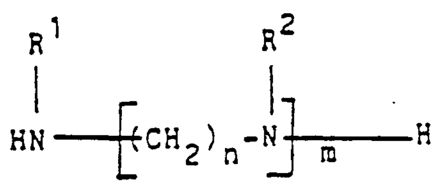

(I)

in which

$R^1$ and $R^2$ independently of one another are hydrogen or a $C_1$-$C_{10}$-, preferably $C_{1-4}$-alkyl radical which is optionally substituted by a primary amino or hydroxyl group,

m is an integer from 1 to 8, preferably 2 to 4, and

n is an integer from 2 to 10, preferably 3 to 6.

**4.** A reaction product according to one or more of Claims 1 to 3, characterised in that it is based on a polyamidoamine which has been prepared from diethylenetriamine, triethylenetetramine or tetraethylenepentamine as component b) and a monoalkanolamine in which $R^3$ is preferably an alkylene radical having 2 - 4 carbon atoms, but is particularly 2-aminoethanol, as component c).

**5.** A reaction product according to one or more of Claims 1 to 4, characterised in that it is based on a polyamidoamine which has been prepared from polyamines, alkanolamines and dicarboxylic acids in the ratio of the sum of the primary $NH_2$ groups to the carboxyl groups of (0.95-1.1) : 1 and in which the ratio of the molar amounts of polyamines b) to alkanolamines c) is 0.8 : 0.2 to 0.95 to 0.05.

**6.** A reaction product according to one or more of Claims 1 to 5, characterised in that the reaction product is derived from 0.8 to 2 mol of epihalohydrin per free basic amino group remaining in the polyamidoamine.

7. A reaction product according to Claim 6, characterised in that 0.9 to 1.55 mol of epihalohydrin are reacted per amino group.

8. A reaction product according to one or more of Claims 1 to 7, characterised in that the component b2) contains the additional polyamines in an amount such that their content of primary amino groups, relative to the total amount of primary amino groups, does not exceed 50%, and in particularly 30%.

9. A process for the preparation of binders based on epihalohydrin and water-soluble basic polyamidoamines according to one or more of Claims 1 to 8, characterised in that the epihalohydrin and the polyamidoamine are reacted with one another in aqueous solution, preferably at 40 to 70 °C, until a sample of the reaction mixture in the form of a 20% strength aqueous solution has a viscosity of 20 - 80 mPa.s at 25 °C.

10. The use of the reaction product according to one or more of Claims 1 - 8, or the products prepared by the process according to Claim 9, as an auxiliary in the paper industry, in particular for increasing the wet strength of paper.

Claims for the following Contracting State: AT

1. A process for the preparation of a water-soluble reaction product, as a binder, which is largely free of ester bonds, from epihalohydrin and water-soluble, basic polyamidoamines, characterised in that polyamidoamines which are reaction products of

a) saturated or olefinically unsaturated aliphatic $C_{4-10}$-dicarboxylic acids or their functional derivatives and/or ω-aminocarboxylic acids containing at least three carbon atoms or their lactams with

b1) aliphatic polyamines which contain at least two primary and at least one other, in particular secondary and/or tertiary, amino group, or

b2) a mixture of the polyamines b1) with polyamines which contain at least one primary and, if desired, at least one secondary amino group and do not come under the definition b1), where the additional polyamines can be added in amounts such that their content of primary amino groups, relative to the total amount of primary amino groups, does not exceed 70%, preferably 50% and in particular 30%, and

c) monoalkanolamines of the formula $H_2N-R^3-OH$, where $R^3$ is an n-, iso- or cycloalkylene radical having 2 - 10, preferably 2 - 4, carbon atoms

and where the ratio of the sum of the primary $NH_2$ groups to the carboxyl groups or their functional derivatives is (0.8-1.4) : 1, and that of the molar amounts of polyamines to alkanolamine is (0.6:0.4) to (0.99:0.01), and the epihalohydrin are reacted with one another in aqueous solution, at 25 to 95, preferably 40 to 70 °C, until a sample of the reaction mixture in the form of a 20% strength aqueous solution has a viscosity of 20 - 80 mPa.s at 25 °C.

2. The process according to Claim 1, characterised in that a polyamidoamine is employed which is synthesised from at least one of the acids succinic acid, glutaric acid and adipic acid as the acid component.

3. The process according to Claim 1 or 2, characterised in that a polyamidoamine is employed whose components b1) and b2) are polyalkylenepolyamines of the formula (I)

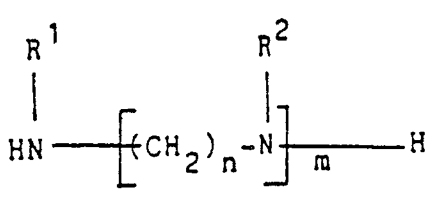

(I)

in which

$R^1$ and $R^2$ independently of one another are hydrogen or a $C_1$-$C_{10}$-, preferably $C_{1-4}$-alkyl radical which is optionally substituted by a primary amino or hydroxyl group,

m is an integer from 1 to 8, preferably 2 to 4, and

n is an integer from 2 to 10, preferably 3 to 6.

4. The process according to one or more of Claims 1 to 3, characterised in that a polyamidoamine is employed which has been prepared from diethylenetriamine, triethylenetetramine or tetraethylenepentamine as component b) and a monoalkanolamine in which $R^3$ is preferably an alkylene radical having 2 - 4 carbon atoms, but is particularly 2-aminoethanol, as component c).

5. The process according to one or more of Claims 1 to 4, characterised in that a polyamidoamine is employed which has been prepared from polyamines, alkanolamines and dicarboxylic acids in the ratio of the sum of the primary $NH_2$ groups to the carboxyl groups or (0.95-1.1) : 1.

6. The process according to one or more of Claims 1 to 5, characterised in that the ratio of the molar amounts of polyamines b) to alkanolamines c) is 0.8 : 0.2 to 0.95 : 0.05.

7. The process according to one or more of Claims 1 to 6, characterised in that 0.8 to 2 mol of epihalohydrin are reacted per free basic amino group remaining in the polyamidoamine.

8. The process according to Claim 7, characterised in that 0.9 to 1.55 mol of epihalohydrin are reacted per amino group.

9. The process according to one or more of Claims 1 to 8, characterised in that a component b2) is employed which contains additional polyamines in an amount such that their content of primary amino groups, relative to the total amount of primary amino groups, does not exceed 50%, and in particular 30%.

10. The use of the reaction product according to one or more of Claims 1 - 8, or of the products prepared by the process according to Claim 9, as an auxiliary in the paper industry, in particular for increasing the wet strength of paper.

**Revendications**

1. Produits de réaction hydrosolubles, largement sans liaisons esters, d'épihalogénhydrines et de polyamidoamines basiques hydrosolubles, produits qui se caractérisent en ce que les polyamidoamines sont des produits de réaction :
   a) d'acides dicarboxyliques aliphatiques saturés ou oléfiniques en $C_{4-10}$ ou de dérivés fonctionnels de ces acides, et/ou d'acides $\omega$-aminocarboxyliques ayant au moins trois atomes de carbone ou de leurs lactames, avec
   b1) des polyamines aliphatiques ayant au moins deux groupes amino primaires et au moins un autre groupe amino, à savoir secondaire et/ou tertiaire, ou
   b2) un mélange des polyamines b1 avec des polyamines ayant au moins un groupe amino primaire et le cas échéant un ou plusieurs groupes amino secondaires, et qui sont différentes des polyamines b1, ces autres polyamines nouvant être employées dans des proportions telles que leur teneur en groupes amino primaires, rapportée à la totalité des groupes amino primaires, ne dépasse pas 70%, et
   c) des monoalcanolamines de formule $H_2N\text{-}R^3\text{-}OH$, $R^3$ étant un groupe n-, iso- ou cyclo-alkylène en $C_{2-10}$, de préférence en $C_{2-4}$,
   le rapport de la somme des groupes $NH_2$ primaires aux groupes carboxyliques ou leurs dérivés fonctionnels étant compris entre 0,8 et 1,4 et le rapport entre les proportions molaires des polyamines et des alcanolamines étant compris entre (0,6:0,4) et (0,99:0,01).

2. Produits de réaction selon la revendication 1 caractérisés en ce que les polyamidoamines sont formées d'au moins l'un des acides succinique, glutarique et adipique comme composant acide.

3. Produits de réaction selon la revendication 1 ou 2, caractérisés en ce que les composants b1) et/ou b2) des polyamidoamines sont des polyalkylènes-polyamines de formule (I)

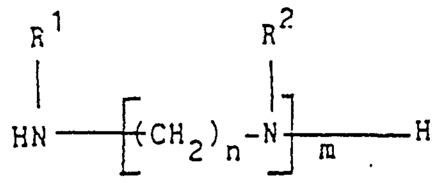

(I)

dans laquelle
$R^1$ et $R^2$ désignent chacun, indépendamment l'un de l'autre, l'hydrogène ou un alkyle en $C_1$-$C_{10}$, de préférence en $C_{1-4}$, avec éventuellement comme substituant un groupe amino primaire ou un groupe hydroxylique,
m est un entier de 1 à 8, de préférence de 2 à 4, et
n un entier de 2 à 10, de préférence de 3 à 6.

**4.** Produits de réaction selon une ou plusieurs des revendications 1 à 3, caractérisés en ce que les polyamidoamines ont été obtenues à partir de diéthylènetriamine, de triéthylène-tétramine ou de tétraéthylènepentamine comme composant b), et comme composant c) de monoalcanolamines dont le radical $R^3$ est de préférence un alkylène en $C_{2-4}$, mais en particulier est du 2-aminoéthanol.

**5.** Produits de réaction selon une ou plusieurs des revendications 1 à 4, caractérisés en ce que les polyamidoamines ont été obtenues à partir de polyamines, d'alcanolamines et d'acides dicarboxyliques dans un rapport de la somme des groupes amino primaires $NH_2$ aux groupes carboxyliques compris entre 0,95 et 1,1, et dans ces polyamidoamines le rapport entre les proportions molaires des polyamines b) et des alcanolamines c) est compris entre 0,8:0,2 et 0,95:0,05.

**6.** Produits de réaction selon une ou pluieurs des revendications 1 à 5, caractérisés en ce qu'ils sont obtenus par réaction de 0,8 à 2 mol de 1'épihalogénhydrine par groupe amino basique libre restant sur la polyamidoamine.

**7.** Produits de réaction selon la revendication 6, caractérisés en ce qu'ils sont obtenus par réaction de 0,9 à 1,55 mol de l'épihalogénhydrine par groupe amino.

**8.** Produits de réaction selon une ou plusieurs des revendications 1 à 7, caractérisés en ce que le composant b2) comprend des polyamines supplémentaires dans une proportion donnant une teneur en groupes amino primaires qui ne dépasse pas 50% et en particulier 30% de la totalité des groupes amino primaires.

**9.** Procédé de préparation de liants à base d'épihalogénhydrines et de polyamidoamines basiques hydrosolubles selon une ou plusieurs des revendications 1 à 8, procédé caractérisé en ce que l'on fait réagir l'épihalogénhydrine avec la polyamidoamine en solution aqueuse, de préférence entre 40 et 70° C, jusqu'à ce qu'un prélèvement du mélange de réaction, en une solution aqueuse à 20%, ait à la température de 25° C une viscosité de 20 à 80 mPa.s.

**10.** Emploi des produits de réaction selon une ou plusieurs des revendications 1 à 8, ou des produits obtenus par le procédé de la revendication 9, comme adjuvants dans l'industrie du papier, notamment pour accroître la résistance de papier à l'état humide.

Revendications pour l'Etat contractant suivant: AT

**1.** Procédé de préparation de produits de réaction hydrosolubles, largement sans liaisons esters, comme liants,
produits formés d'épihalogénhydrines et de polyamidoamines basiques hydrosolubles, procédé caractérisé en ce que l'on fait réagir des polyamidoamines qui sont des produits de réaction :
a) d'acides dicarboxyliques aliphatiques saturés ou oléfiniques en $C_{4-10}$ ou de dérivés fonctionnels de ces acides, et/ou d'acides $\omega$-aminocarboxyliques ayant au moins trois atomes de carbone ou de leurs lactames, avec
b1) des polyamines aliphatiques ayant au moins deux groupes amino primaires et au moins un autre groupe amino, à savoir secondaire et/ou tertiaire, ou

b2) un mélange des polyamines b1 avec des polyamines ayant au moins un groupe amino primaire et le cas échéant un ou plusieurs groupes amino secondaires, et qui sont différentes des polyamines b1, ces autres polyamines pouvant être employées dans des proportions telles que leur teneur en groupes amino primaires, rapportée à la totalité des groupes amino primaires, ne dépasse pas 70%, et

c) des monoalcanolamines de formule $H_2N$-$R^3$-OH, $R^3$ étant un groupe n-, iso- ou cyclo-alkylène en $C_{2-10}$, de préférence en $C_{2-4}$.,

le rapport de la somme des groupes $NH_2$ primaires aux groupes carboxyliques ou leurs dérivés fonctionnels étant compris entre 0,8 et 1,4 et le rapport entre les proportions molaires des polyamines et des alcanolamines entre (0,6:0,4) et (0,99:0,01), avec l'épihalogénhydrine en solution aqueuse entre 25 et 95° C, de préférence entre 40 et 70° C, jusqu'à ce qu'un prélèvement du mélange de réaction, en une solution aqueuse à 20%, ait à la température de 25° C une viscosité de 20 à 80 mPa.s.

2. Procédé selon la revendication 1, caractérisé en ce que les polyamidoamines sont formées de l'un au moins des acides succinique, glutarique et adipique comme composant acide.

3. Procédé selon la revendication 1 ou 2, caractérisé en ce que l'on utilise des polyamidoamines dont les composants b1) et/ou b2) sont des polyalkylènes-polyamines de formule (I) ci-dessous :

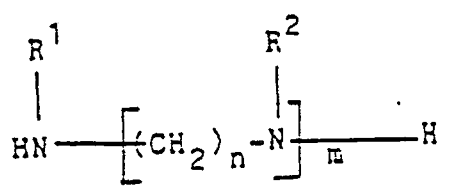

(I)

dans laquelle $R^1$ et $R^2$ désignent chacun, indépendamment l'un de l'autre, l'hydrogène ou un groupe alkyle en $C_{1-10}$, de préférence en $C_1$-$C_4$, avec éventuellement comme substituant un groupe amino primaire ou hydroxylique,

m est un entier de 1 à 8, de préférence de 2 à 4, et

n un entier de 2 à 10, de préférence de 3 à 6.

4. Procédé selon une ou plusieurs des revendications 1 à 3, caractérisé en ce que les polyamidoamines employées ont été obtenues à partir de diéthylène-triamine, de triéthylène-tétramine ou de tétraéthylène-pentamine comme composant b), et comme composant c) de monoalcanolamines dont le radical $R^3$ est de préférence un alkylène en $C_{2-4}$, mais en particulier est du 2-amino-éthanol.

5. Procédé selon une ou plusieurs des revendications 1 à 4, caractérisé en ce que les polyamidoamines employées ont été obtenues à partir de polyamines, d'alcanolamines et d'acides dicarboxyliques dans un rapport de la somme des groupes $NH_2$ primaires aux groupes carboxyliques compris entre 0,95 et 1,1.

6. Procédé selon une ou plusieurs des revendications 1 à 5, caractérisé en ce que le rapport entre les proportions molaires des polyamines b) et des alcanolamines c) est compris entre 0,8:0,2 et 0,95:0,05.

7. Procédé selon une ou plusieurs des revendications 1 à 6, caractérisé en ce que l'on fait réagir de 0,8 à 2 mol de l'épihalogénhydrine par groupe amino basique libre restant sur la polyamidoamine.

8. Procédé selon la revendication 7, caractérisé en ce que l'on fait réagir de 0,9 à 1,55 mol de l'épihalogénhydrine par groupe amino.

9. Procédé selon une ou plusieurs des revendications 1 à 8, caractérisé en ce que l'on utilise un composant b2) qui comprend des polyamines suppplémentaires dans une proportion donnant une teneur en groupes amino primaires qui ne dépasse pas 50% et en particulier 30% de la totalité des groupes amino primaires.

10. Emploi des produits de réaction obtenus selon une ou plusieurs des revendications 1 à 9, ou des

produits obtenus suivant le procédé de la revendication 9 comme adjuvants dans l'industrie du papier, notamment pour accroître la résistance du papier à l'état humide.